(19) Europäisches Patentamt
European Patent Office
Office européen des brevets

(11) Veröffentlichungsnummer: **0 048 437**
**A2**

# (12) EUROPÄISCHE PATENTANMELDUNG

(21) Anmeldenummer: **81107306.3**

(22) Anmeldetag: **16.09.81**

(51) Int. Cl.³: **C 07 F 9/60**
A 01 N 57/16, A 01 N 57/24
A 01 N 57/32

(30) Priorität: **20.09.80 DE 3035650**

(43) Veröffentlichungstag der Anmeldung:
**31.03.82 Patentblatt 82/13**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Gildemeister, Horst, Dr.**
**Faaker Strasse 13**
**D-6200 Wiesbaden(DE)**

(72) Erfinder: **Mildenberger, Hilmar, Dr.**
**Fasanenstrasse 24**
**D-6233 Kelkheim (Taunus)(DE)**

(72) Erfinder: **Knauf, Werner, Dr.**
**Im Kirschgarten 24**
**D-6239 Eppstein/Taunus(DE)**

(72) Erfinder: **Waltersdorfer, Anna, Dr.**
**Rauenthaler Weg 28**
**D-6000 Frankfurt am Main 71(DE)**

(72) Erfinder: **Sachse, Burkhard, Dr.**
**An der Ziegelei 30**
**D-6233 Kelkheim (Taunus)(DE)**

(54) **(Thiono) (Thiol) Phosphor (phosphon)-säureester bzw. esteramide von substituierten 4-Hydroxychinolinen, ihre Herstellung und ihre Verwendung als Schädlingsbekämpfungsmittel.**

(57) Phosphor- und Phosphonsäurederivate von substituierten 4-Hydroxichinolinen der Formel

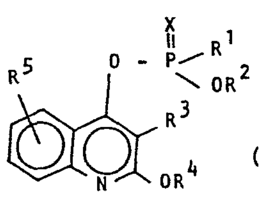

(1)

worin $R^1$ Alkyl, Alkoxy, Alkylthio, (Di)alkylamino oder Phenyl; $R^2$ und $R^4$ Alkyl, $R^3$ H, Halogen, Carbalkoxy, subst. Carbonamido oder CN, $R^5$ H, Halogen, $NO_2$, Alkyl, Alkoxy oder $CF_3$ und X O oder S bedeuten, sind wirksame Insektizide und Fungizide.

EP 0 048 437 A2

(Thiono)(Thiol) Phosphor(phosphon)-säureester bzw. esteramide von substituierten 4-Hydroxychinolinen, ihre Herstellung und ihre Verwendung als Schädlingsbekämpfungsmittel.

---

Gegenstand der Erfindung sind Verbindungen der Formel I

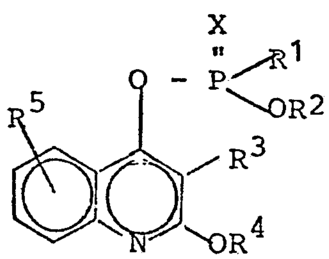

(I)

worin

$R^1$ = $(C_1-C_4)$-Alkyl, $(C_1-C_4)$-Alkoxy, $(C_1-C_4)$-Alkylthio, $(C_1-C_4)$-Alkylamino, $(C_1-C_4)$-Dialkylamino oder Phenyl

$R^2$ = $(C_1-C_4)$-Alkyl,

$R^3$ = Wasserstoff, Halogen, COOAlkyl, CONH(Alkyl) oder $CON(Alkyl)_2$ mit jeweils 1 - 4 C-Atomen je Alkylrest oder CN,

$R^4$ = $(C_1-C_4)$-Alkyl,

$R^5$ = Wasserstoff, Halogen, Nitro, $(C_1-C_4)$-Alkyl, $(C_1-C_4)$-Alkoxy oder Trihalogenmethyl, und

X = Sauerstoff oder Schwefel bedeuten.

"Halogen" bedeutet hier und im folgenden vorzugsweise Fluor, Chlor und Brom, insbesondere Chlor.

Gegenstand der Erfindung ist ferner ein Verfahren zur Herstellung von Verbindungen der Formel I, das dadurch gekennzeichnet ist, daß man 4-Hydroxychinoline der allgemeinen Formel II

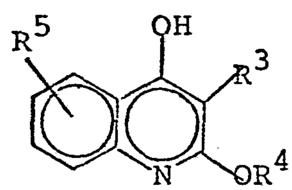

(II)

wobei $R^3$, $R^4$ und $R^5$ die unter der allgemeinen Formel I angegebenen Bedeutungen hat in Gegenwart von säurebindenden Mitteln mit (Thiono)(Thiol)-phosphor (phosphon)-säureesterchloriden bzw. -esteramidchloriden der allgemeinen Formel III

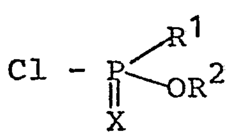

(III)

in denen $R^1$, $R^2$ und X die unter der allgemeinen Formel I angegebenen Bedeutungen hat, umsetzt.

Die Umsetzungen erfolgen vorteilhaft in einem unter den Reaktionsbedingungen inerten Lösungsmittel wie z. B. einem niederen Keton, Acetonitril, Dimethylformamid, Dimethylsulfoxid, Glykoldimethyläther, Diisopropyläther, Benzol, Toluol, Xylol, Chlorbenzol, Äthylacetat oder Dichloräthan bei Temperaturen zwischen Raumtemperatur und dem Siedepunkt des verwendeten Lösungsmittels, vorzugsweise bei 40 - 90°C. Zur Bindung des freiwerdenden Chlorwasserstoffs ist die Zugabe eines säurebindenden Mittels erforderlich. Als solche verwendet man vorteilhaft Alkalialkoholate oder -carbonate oder organische Basen wie Pyridin oder Triäthylamin. Die als Ausgangsmaterial verwendeten 4-Hydroxychinoline der allgemeinen Formel II sind zum Teil bereits beschrieben oder können nach literaturbekannten Methoden hergestellt werden /z. B. J.Y. Merour et al, Synthesis 1978, S. 698 - 700/. Die eingesetzten (Thiono)(Thiol) Phosphor(phosphon)-säureesterchloride bzw. -esteramidchloride der allgemeinen Formel III sind bekannt und können nach üblichen Verfahren hergestellt werden /Houben-Weyl, Bd. XII/1, S. 560; Bd. XII/2, S. 274, 607, 621, 755; SU-PS 184 863/. Die Verbindungen der Formel I zeichnen sich durch eine gute akarizide und insektizide Wirksamkeit aus. Letztere richtet sich sowohl gegen saugende als auch gegen beißende Insekten.

Zu den saugenden Insekten die mit den erfindungsgemäßen Verbindungen bekämpft werden können, gehören beispielsweise Blattläuse (Aphidae) wie die grüne Pfirsichblattlaus (Myzus persicae), die schwarze Bohnen- (Doralis fabae), Kundebohnen- (Aphis craccivora), Hafer- (Rhopalosiphum padi), Erbsen- (Macrosiphum pisi) und Kartoffellaus (Macrosiphum solanifolii), ferner die Johannisbeergallen-

(Cryptomyzus korschelti), mehlige Apfel- (Sappaphis mali), mehlige Pflaumen- (Hyalopterus arundinis) und schwarze Kirschenblattlaus (Myzus cerasi); Blasenfüße (Thysanoptera) wie Hercinothrips fermoralis und Wanzen, beispielsweise die Rüben- (Piesma quadrata), Baumwoll- (Dysdercus intermedius, Oncopeltus fasciatus), Bett- (Cimex lectularius), Raub- (Rhodnius prolixus) und Chagaswanze (Triatoma infestans), ferner Zikaden, wie Euscelis bilobatus und Nephotettix bipunctatus.

Bei den beißenden Insekten wären folgende zu nennen: Schmetterlingsraupen (Lepidoptera) wie die Kohlschabe (Plutella maculipennis), der Schwammspinner (Lymantria dispar), Goldafter (Euproctis chrysorrhoea) und Ringelspinner (Malacosoma neustria), weiterhin die Kohl- (Mamestra brassicae) und die Saateule (Agrotis segetum), der große Kohlweißling (Pieris brassicae), kleine Frostspanner (Cheimatobia brumata), Eichenwickler (Tortrix viridana), der Heer- (Laphygma frugiperda) und aegyptische Baumwollwurm (Prodenia litura), ferner die Gespinst- (Hyponomeuta padella), Mehl- (Ephestia kühniella) und große Wachsmotte (Galleria mellonella).

Weiterhin zählen zu den beißenden Insekten Käfer (Coleoptera) z. B. Korn- (Calandra granaria), Kartoffel- (Leptinotarsa decemlineata), Rapsglanz- (Meligethes aeneus), Himbeer- (Byturus tomentosus), Speisebohnen- (Acanthoscelides obtectus), Speck- (Dermestes frischi), Khapra- (Trogoderma granarium), rotbrauner Reismehl- (Tribolium castaneum), Mais- (Sitophilus zeamais), Brot- (Stegobium paniceum), gemeiner Mehl- (Tenebrio molitor) und Getreideplattkäfer (Oryzaephilus surinamensis);
Schaben wie die Deutsche (Blattella germanica), Amerikanische (Periplaneta americana), Madeira- (Leucophaea maderae) Orientalische (Blatta orientalis), Riesen- (Blaberus

giganteus) und schwarze Riesenschabe (Blaberus fuscus); ferner Orthopteren, z. B. das Heimchen (Acheta domesticus).

Die Dipteren umfassen im wesentlichen Fliegen wie die Tau- (Drosophila melanogaster), Mittelmeerfrucht- (Ceratitis capitata), Stuben- (Musca domestica), kleine Stuben- (Fannia canicularis), Glanz- (Phormia aegina) und Schmeißfliege (Calliphora erythrocephala) sowie den Wadenstecher (Stomoxys calcitrans); ferner Mücken, z. B. Stechmücken wie die Gelbfieber- (Aedes aegypti), Haus- (Culex pipiens) und Malariamücke (Anopheles stephensi).

Zu den Milben (Acari) zählen besonders die Spinnmilben (Tetranychidae) wie die Bohnen- (Tetranychus urticae) und die Obstbaumspinnmilbe (Panonychus ulmi). Gallmilben, z. B. die Johannisbeergallmilbe (Eriophyes ribis) und Tarsonemiden, beispielsweise die Triebspitzenmilbe (Hemitarsonemus latus) und Cyclamenmilbe (Tarsonemus pallidus).

Bei der Anwendung gegen Hygiene- und Vorratsschädlinge, besonders Fliegen und Mücken, zeichnen sich die Verfahrensprodukte außerdem durch eine hervorragende Residualwirkung auf Holz und Ton aus.

Darüberhinaus haben die beanspruchten Verbindungen eine sehr gute fungizide,teilweise systemische, Wirkung gegen phytopathogene Pilze und eignen sich daher hervorragend als Pflanzenschutzmittel. Die Verbindungen erfassen z. B. Phytophthora infestans, Plasmopara viticola, Pythium ultimum, Venturia inaequalis,Rhizoctonia solani und echte Mehltaupilze. Eine ausgezeichnete fungizide Wirkung

weisen die Verbindungen gegen Piricularia oryzae und verschiedene Rostpilze auf.

Gegenstand der Erfindung sind daher auch akarizide, insektizide und fungizide Mittel, gekennzeichnet durch einen Gehalt an Verbindungen der Formel I neben den üblichen Formulierungshilfsmitteln und Inertstoffen sowie die Verwendung der Verbindungen zur Bekämpfung von Akariden, Insekten und phytopathogenen Pilzen.

Die erfindungsgemäßen Mittel enthalten die Wirkstoffe der Formel I im allgemeinen zu 1 - 95 Gew.%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole, Alkyl- oder Alkylphenyl-sulfonate und Dispergiermittel, z. B. ligninsulfonsaures Natrium, 2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden:

Alkylarylsulfonsaure Calziumsalze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyether, Sorbitanfettsäureester, Polyoxethylen-sorbitan-fettsäureester oder Polyoxethylensorbitester.

Stäubemittel erhält man durch Vermahlen des Wirkstoffes mit fein verteilten, festen Stoffen, z. B. Talkum, natürlichen Tonen, wie Kaolin, Bentonit, Pyrophillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen auf die Oberfläche von Trägerstoffen, wie Sand, Kaolinite, oder von granuliertem Inertmaterial. Auch können geeignete Wirkstoffe in der für die Herstellung von Düngemittelgranalien üblichen Weise - gewünschtenfalls in Mischung mit Düngemitteln - hergestellt werden.

In Spritzpulvern variiert die Wirkstoffkonzentration z. B. zwischen etwa 10 % und 80 %, der Rest besteht aus den oben angegebenen Formulierungszusätzen. Bei emulgierbaren Konzentraten kann die Wirkstoffkonzentration gleichfalls etwa 10 % bis 80 % betragen. Staubförmige Formulierungen enthalten meistens 5 - 20 % an Wirkstoff, versprühbare Lösungen etwa 2 - 20 %. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Zur Anwendung werden die handelsüblichen Konzentrate gegebenenfalls in üblicher Weise verdünnt, z. B. bei Spritzpulvern und emulgierbaren Konzentraten mittels Wasser. Die spritzfertigen Suspensionen enthalten vorzugsweise 0,05 bis 2, insbesondere 0.1 bis 1 % Wirkstoff. Staubförmige und granulierte Zubereitungen sowie versprühbare Lösungen werden vor der Anwendung nicht mehr mit weiteren inerten Stoffen verdünnt.

Herstellungsbeispiele

Beispiel 1

Thiophosphorsäure-O,O-diäthyl-O-(2-äthoxy-3-carbäthoxy-4-chinolinyl)-ester

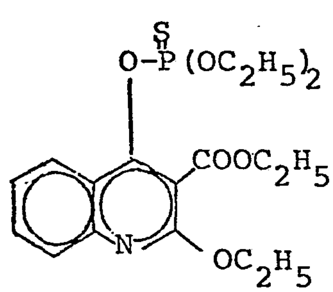

5,6 (0,05 Mol) Kalium-tert. butylat werden in 150 ml absolutem Acetonitril suspendiert und 13 g (0,05 Mol) 2-Äthoxy-3-carbäthoxy-4-hydroxychinolin zugegeben. Das Gemisch wird ca.

30 Minuten bei 50°C gerührt. Nach Zugabe von 9,4 g (0,05 Mol) 0,0-Diäthylthiophosphorylchlorid wird das Reaktionsgemisch 5 Stunden bei 50 - 60°C gerührt und anschließend im Vakuum eingeengt. Der Rückstand wird in 200 ml Toluol aufgenommen und nacheinander mit 100 ml Wasser, 100 ml 1n-Natronlauge und abermals 100 ml Wasser ausgerührt. Die organische Phase wird mit Natriumsulfat getrocknet. Nach Abdestillieren des Lösungsmittels im Vakuum werden 17,2 g Thiophosphorsäure-0,0-diäthyl-0-(2-äthoxy-3-carbäthoxy-4-chinolinyl)-ester mit dem Brechungsindex $n_D^{23}$= 1,5452 erhalten.

In analoger Weise erhält man

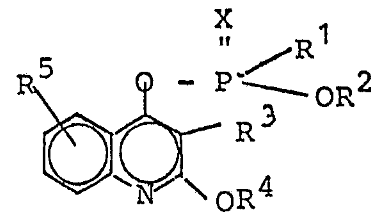

Tabelle 1

| Beispiel Nr. | $R^1$ | $R^2$ | $R^3$ | $R^4$ | $R^5$ | X | Physik. Daten |
|---|---|---|---|---|---|---|---|
| 2 | $OC_2H_5$ | $C_2H_5$ | $COOC_2H_5$ | $C_2H_5$ | H | O | $n_D^{31,5}$: 1.5252 |
| 3 | $S-n-C_3H_7$ | $C_2H_5$ | $COOC_2H_5$ | $C_2H_5$ | H | O | $n_D^{22}$ : 1.5459 |
| 4 | $S-n-C_3H_7$ | $C_2H_5$ | $COOC_2H_5$ | $C_2H_5$ | H | S | $n_D^{23}$ : 1.5723 |
| 5 | $CH_3$ | $C_2H_5$ | $COOC_2H_5$ | $C_2H_5$ | H | S | $n_D^{28}$ : 1,5622 |
| 6 | $C_2H_5$ | $CH_3$ | $COOC_2H_5$ | $C_2H_5$ | H | S | Fp: 63 - 67°C |
| 7 | $C_2H_5$ | $C_2H_5$ | $COOC_2H_5$ | $C_2H_5$ | H | S | $n_D^{31,5}$: 1.5533 |
| 8 | $C_2H_5$ | $i-C_3H_7$ | $COOC_2H_5$ | $C_2H_5$ | H | S | $n_D^{27,5}$: 1.5503 |
| 9 | $S-n-C_3H_7$ | $C_2H_5$ | $COOCH_3$ | $C_2H_5$ | H | O | $n_D^{21}$ : 1,5532 |
| 10 | $S-n-C_3H_7$ | $C_2H_5$ | $COOCH_3$ | $C_2H_5$ | H | S | $n_D^{20}$ : 1,5747 |
| 11 | $S-n-C_3H_7$ | $C_2H_5$ | $COO-n-C_3H_7$ | $C_2H_5$ | H | O | |
| 12 | $S-n-C_3H_7$ | $C_2H_5$ | $COO-n-C_3H_7$ | $C_2H_5$ | H | S | |
| 13 | $S-n-C_3H_7$ | $C_2H_5$ | $COO-i-C_3H_7$ | $C_2H_5$ | H | O | $n_D^{21}$ : 1,5445 |

| Beispiel Nr. | $R^1$ | $R^2$ | $R^3$ | $R^4$ | $R^5$ | X | Physik. Daten |
|---|---|---|---|---|---|---|---|
| 14 | $S-n-C_3H_7$ | $C_2H_5$ | $COO-i-C_3H_7$ | $C_2H_5$ | H | S | $n_D^{25}$ : 1,5648 |
| 15 | $S-n-C_3H_7$ | $C_2H_5$ | $COOC_2H_5$ | $CH_3$ | H | O | $n_D^{21}$ : 1,5588 |
| 16 | $S-n-C_3H_7$ | $C_2H_5$ | $COOC_2H_5$ | $CH_3$ | H | S | $n_D^{24}$ : 1,5808 |
| 17 | $S-n-C_3H_7$ | $C_2H_5$ | $COOC_2H_5$ | $n-C_3H_7$ | H | O | $n_D^{21}$ : 1,5452 |
| 18 | $S-n-C_3H_7$ | $C_2H_5$ | $COOC_2H_5$ | $n-C_3H_7$ | H | S | $n_D^{23}$ : 1,5649 |
| 19 | $S-n-C_3H_7$ | $C_2H_5$ | $COOC_2H_5$ | $i-C_3H_7$ | H | O | |
| 20 | $S-n-C_3H_7$ | $C_2H_5$ | $COOC_2H_5$ | $i-C_3H_7$ | H | S | |
| 21 | $S-n-C_3H_7$ | $C_2H_5$ | $CONH-C_3H_7$ | $C_2H_5$ | H | O | |
| 22 | $S-n-C_3H_7$ | $C_2H_5$ | $CONH-C_3H_7$ | $C_2H_5$ | H | S | |
| 23 | $S-n-C_3H_7$ | $C_2H_5$ | $CONH-i-C_3H_7$ | $C_2H_5$ | H | O | |
| 24 | $S-n-C_3H_7$ | $C_2H_5$ | $CONH-i-C_3H_7$ | $C_2H_5$ | H | S | Öl |

| Beispiel Nr. | $R^1$ | $R^2$ | $R^3$ | $R^4$ | $R^5$ | X | Physik. Daten |
|---|---|---|---|---|---|---|---|
| 25 | $S-C_2H_5$ | $C_2H_5$ | $COON(CH_3)_2$ | $C_2H_5$ | H | O | |
| 26 | $S-n-C_3H_7$ | $C_2H_5$ | $COON(CH_3)_2$ | $C_2H_5$ | H | S | |
| 27 | $S-CH_3$ | $C_2H_5$ | $COON(C_2H_5)_2$ | $C_2H_5$ | H | O | |
| 28 | $S-n-C_3H_7$ | $C_2H_5$ | $COON(C_2H_5)_2$ | $C_2H_5$ | H | S | |
| 29 | $S-n-C_3H_7$ | $C_2H_5$ | CN | $C_2H_5$ | H | O | $n_D^{20}$ :1,5732 |
| 30 | $S-n-C_3H_7$ | $C_2H_5$ | CN | $C_2H_5$ | H | S | $n_D^{23}$ : 1,5879 |
| 31 | $S-n-C_3H_7$ | $C_2H_5$ | Cl | $C_2H_5$ | H | O | |
| 32 | $S-n-C_3H_7$ | $C_2H_5$ | Cl | $C_2H_5$ | H | S | |
| 33 | $OC_2H_5$ | $C_2H_5$ | H | $C_2H_5$ | H | S | $n_D^{31,5}$: 1,5529 |
| 34 | $S-n-C_3H_7$ | $C_2H_5$ | H | $C_2H_5$ | H | O | $n_D^{19}$ : 1,5647 |
| 35 | $S-n-C_3H_7$ | $C_2H_5$ | H | $C_2H_5$ | H | S | $n_D^{23}$ : 1.5855 |
| 36 | $C_2H_5$ | $C_2H_5$ | H | $C_2H_5$ | H | S | $n_D^{31,5}$: 1.5626 |
| 37 | $NH-i-C_3H_7$ | $C_2H_5$ | H | $C_2H_5$ | H | S | Fp: 55 -58°C |

| Beispiel Nr. | $R^1$ | $R^2$ | $R^3$ | $R^4$ | $R^5$ | X | Physik. Daten |
|---|---|---|---|---|---|---|---|
| 38 | $S-n-C_3H_7$ | $C_2H_5$ | $COOC_2H_5$ | $C_2H_5$ | 8-Cl | O | $n_D^{21}$ : 1,5623 |
| 39 | $S-n-C_3H_7$ | $C_2H_5$ | $COOC_2H_5$ | $C_2H_5$ | 7-Cl | O | $n_D^{20}$ : 1,5598 |
| 40 | $S-n-C_3H_7$ | $C_2H_5$ | $COOC_2H_5$ | $C_2H_5$ | 7-Cl | S | $n_D^{20}$ : 1,5765 |
| 41 | $S-n-C_3H_7$ | $C_2H_5$ | $COOC_2H_5$ | $C_2H_5$ | 6-Cl | O | Fp : 49 - 50°C |
| 42 | $S-n-C_3H_7$ | $C_2H_5$ | $COOC_2H_5$ | $C_2H_5$ | 6-Cl | S | $n_D^{20}$ : 1,5743 |
| 43 | $S-n-C_3H_7$ | $C_2H_5$ | $COOC_2H_5$ | $C_2H_5$ | 5-Cl | O | $n_D^{20}$ : 1,5627 |
| 44 | $S-n-C_3H_7$ | $C_2H_5$ | $COOC_2H_5$ | $C_2H_5$ | 5-Cl | S | $n_D^{20}$ : 1,5763 |
| 45 | $S-n-C_3H_7$ | $C_2H_5$ | $COOC_2H_5$ | $C_2H_5$ | 7-Br | O | $n_D^{20}$ : 1,5662 |
| 46 | $S-n-C_3H_7$ | $C_2H_5$ | $COOC_2H_5$ | $C_2H_5$ | 7-Br | S | $n_D^{20}$ : 1,5852 |
| 47 | $S-n-C_3H_7$ | $C_2H_5$ | $COOC_2H_5$ | $C_2H_5$ | 6-Br | O | $n_D^{21}$ : 1,5712 |
| 48 | $S-n-C_3H_7$ | $C_2H_5$ | $COOC_2H_5$ | $C_2H_5$ | 6-Br | S | $n_D^{20}$ : 1,5862 |
| 49 | $S-n-C_3H_7$ | $C_2H_5$ | $COOC_2H_5$ | $C_2H_5$ | $7-NO_2$ | O | Fp : 59 - 68°C |
| 50 | $S-n-C_3H_7$ | $C_2H_5$ | $COOC_2H_5$ | $C_2H_5$ | $7-CH_3$ | O | |
| 51 | $S-n-C_3H_7$ | $C_2H_5$ | $COOC_2H_5$ | $C_2H_5$ | $7-CH_3$ | S | |

| Beispiel Nr. | $R^1$ | $R^2$ | $R^3$ | $R^4$ | $R^5$ | X | Physik Daten |
|---|---|---|---|---|---|---|---|
| 52 | $S-n-C_3H_7$ | $C_2H_5$ | $COOC_2H_5$ | $C_2H_5$ | $6-CH_3$ | O | $n_D^{20}$ : 1,5513 |
| 53 | $S-n-C_3H_7$ | $C_2H_5$ | $COOC_2H_5$ | $C_2H_5$ | $6-CH_3$ | S | $n_D^{20}$ : 1,5688 |
| 54 | $S-n-C_3H_7$ | $C_2H_5$ | $COOC_2H_5$ | $C_2H_5$ | $7-OCH_3$ | O | |
| 55 | $S-n-C_3H_7$ | $C_2H_5$ | $COOC_2H_5$ | $C_2H_5$ | $7-OCH_3$ | S | |
| 56 | $S-n-C_3H_7$ | $C_2H_5$ | $COOC_2H_5$ | $C_2H_5$ | $7-CF_3$ | O | $n_D^{21}$ : 1,5183 |
| 57 | Phenyl | $C_2H_5$ | $COOC_2H_5$ | $C_2H_5$ | H | O | |
| 58 | Phenyl | $C_2H_5$ | $COOC_2H_5$ | $C_2H_5$ | H | S | |

Formulierungsbeispiele

Beispiel a

Ein emulgierbares Konzentrat wird erhalten aus

15 Gew.-Teilen Wirkstoff
75 Gew.-Teilen Cyclohexanon als Lösungsmittel
und 10 Gew.-Teilen oxethyliertem Nonylphenol (10 AeO) als Emulgator.

Beispiel b

Ein in Wasser leicht dispergierbares benetzbares Pulver wird erhalten, indem man

25 Gew.-Teile Wirkstoff
64 Gew.-Teile aktiver Kieselsäure als Inertstoff
10 Gewichtsteile ligninsulfonsaures Calcium
und 1 Gew.-Teil oleylmethyltaurinsaures Natrium als Netz- und Dispergiermittel mischt und in einer Stiftmühle mahlt.

Beispiel c

Ein Stäubemittel wird erhalten, indem man
10 Gew.-Teile Wirkstoff
und 90 Gew.-Teile Talkum als Inertstoff mischt und in einer Schlagmühle zerkleinert.

Beispiel d

Ein Granulat besteht z. B. aus etwa

2- 15 Gew.-Teilen Wirkstoff
98- 85 Gew.-Teilen inerten Granulatmaterialien, wie z. B. Attapulgit, Bimsstein und Quarzsand.

## Biologische Beispiele

### Beispiel I

Mit Kundebohnenblattläusen (Aphis craccivora) stark besetzte Ackerbohnen (Vicia faba) wurden mit der wäßrigen Suspension eines Spritzpulverkonzentrates, die 0,0125 Gew.-% des Wirkstoffes aus Beispiel 3 enthielt, bis zum Stadium des Abtropfens gespritzt. Nach Aufstellung der Pflanzen im Gewächshaus wurde 3 Tage nach der Behandlung eine 100%ige Abtötung der Versuchstiere festgestellt. Ebenso wirksam erwiesen sich die Verbindungen gemäß Beispiel 4, 33 und 35.

### Beispiel II

Mit Bohnenspinnmilben (Tetranychus urticae normal sensibel) stark befallene Bohnenpflanzen (Phaseolus vulgaris) wurden mit der wäßrigen Verdünnung eines Spritzpulverkonzentrates, die 0.0125 Gew.-% des Wirkstoffs aus Beispiel 3 enthielt, bis zum Stadium des beginnenden Abtropfens gespritzt. Bei der mikroskopischen Kontrolle 8 Tage nach der Behandlung zeigte sich, daß alle Stadien der Population getötet waren. In gleicher Weise geprüft, erwiesen sich die Verbindungen gemäß Beispiel 4, 33, 34, 35, 36 und 37 als ebenso wirksam.

### Beispiel III

Baumwollwanzen (Oncopeltus fasciatus wurden mit wäßrigen Verdünnungen von Spritzpulverkonzentraten (jeweils 0.025 Gew.-% Wirkstoff in der Spritzbrühe) der Wirkstoffe aus Beispiel 1, 33, 36 und 37 tropfnaß gespritzt. Anschließend wurden die Wanzen in mit luftdurchlässigen Deckeln versehenen Behältern aufgestellt. 5 Tage nach der

Behandlung wurde die Mortalität festgestellt und betrug in jedem Einzelfall 100 %.

Beispiel IV

Auf die Innenseite des Deckels und des Bodens einer Petrischale wurden mittels einer Pipette 1 ml der zu testenden Verbindung (Beispiel 3) als Wirkstoff in Aceton mit einer Konzentration von 0.0125 Gew.-% gleichmäßig aufgetragen und bis zur vollständigen Verdunstung des Lösungsmittels die Schalen offen belassen. Danach wurden je 10 Stubenfliegen (Musca domestica) in die Petrischalen gesetzt, die Schalen mit dem Deckel verschlossen und nach 3 Stunden eine 100 % Abtötung der Versuchstiere festgestellt.
Ebenso wirksam erwiesen sich die Verbindungen gemäß Beispiel 36 und 37.

Beispiel V

Wie im Beispiel IV beschrieben, wurde die Verbindung nach Beispiel 3 als Wirkstoff in Aceton mit einer Konzentration von 0.025 Gew.-% gleichmäßig auf die Innenseiten des Deckels und des Bodens einer Petrischale aufgetragen und abtrocknen lassen. Danach wurden je Petrischale 10 Larven (L 4) der Deutschen Schabe (Blatella germanica) eingesetzt, die Schalen mit dem Deckel verschlossen und nach 72 Stunden eine 100 % Abtötung der Versuchstiere festgestellt.
Ebenso wirksam erwies sich die Verbindung gemäß Beispiel 36.

Beispiel VI

Blätter der Baumwolle (Gossypium sp.) wurden mit einer wäßrigen

Emulsion der Verbindung gemäß Beispiel 3 in einer Konzentration von 0.025 Gew.-%, bezogen auf Wirkstoff, besprüht (≙ 600 l Spritzbrühe/ha) und ebenso behandelte Raupen (10 Stück, Stadium L 3 - 4) des gemeinen Baumwollwurms (Prodenia litura) hinzugesetzt. Blätter und Raupen wurden zusammen in Beobachtungskäfige gegeben und nach 48 Stunden eine 100 % Abtötung der Versuchstiere festgestellt. Ebensowirksam erwiesen sich die Verbindungen gemäß Beispiel 34, 35 und 4.

Beispiel VII

Blätter des Kohls (Brassica oleracea) wurden wie in Beispiel VI beschrieben, mit einer wäßrigen Emulsion der Verbindung gemäß Beispiel 3 in einer Konzentration von 0.0125 Gew.-% besprüht und ebenso behandelte Raupen (10 Stück, Stadium 3 - 4) der Kohlschabe (Plutella xylostella) hinzugesetzt.
Blätter und Raupen wurden zusammen in Beobachtungskäfige gegeben und nach 48 Stunden eine 100 % Abtötung der Versuchstiere festgestellt.

Beispiel VIII

Auf Blätter des Kohls, die wie in Beispiel VII mit der Verbindung aus Beispiel 3 behandelt worden waren, wurden ebenso behandelte Raupen (10 Stück, L 3 - 4) der Kohleule (Mamestra brassicae) gesetzt und zusammen in Beobachtungskäfige gegeben. Nach 48 Stunden war eine 100 % Abtötung der Versuchstiere festzustellen.

Beispiel IX

Blätter der Bohne (Phaseolus vulgaris) wurden mit einer wäßrigen Emulsion der Verbindung aus Beispiel 3 in einer

Konzentration von 0.0125 Gew.-% (bezogen auf Wirkstoff) behandelt und zu gleich behandelten Larven des Mexikanischen Bohnenkäfers (Epilachna varivestis) in Beobachtungskäfige gestellt. Eine Auswertung nach 48 Stunden ergab eine 100 % Abtötung der Versuchstiere.
Als gleichermaßen wirksam erwiesen sich die Verbindungen gemäß Beispiel 4 und 35.

Beispiel X

Reispflanzen wurden im 4-Blattstadium mit den in Tabelle I angegebenen Verbindungen in Konzentrationen von 1000, 500, 250 und 125 mg Wirkstoff/Ltr. Spritzbrühe tropfnaß gespritzt. Nach dem Antrocknen des Spritzbelages wurden die Pflanzen mit einer Sporensuspension von Piricularia oryzae gleichmäßig besprüht und für $48^h$ in eine Klimakammer mit 25°C und 100 % rel. Luftfeuchte gestellt. Anschließend wurden die Pflanzen in einem Gewächshaus bei 25°C und 85 % rel. Luftfeuchte gehalten und 14 Tage nach Inokulation auf Befall mit Piriczlaria oryzae untersucht. Der Befallsgrad wurde ausgedrückt in % befallener Blattfläche, bezogen auf unbehandelte, infizierte Kontrollpflanzen (= 100 % Befall).

Tabelle I

| Verbindung gem. Beispiel | mit Piricularia oryzae befallene Blattfläche in % bei mg-Wirkstoff/Ltr. Spritzbrühe | | | |
|---|---|---|---|---|
| | 1000 | 500 | 250 | 125 |
| 2 | 0 | 0 | 0-3 | 3 |
| 3 | 0 | 0 | 0 | 0 |
| Unbehandelte infiz. Pflanzen | | 100 | | |

Aus Beispiel X geht die ausgezeichnete fungizide Wirkung der beanspruchten Verbindung gegen Piricularia oryzae hervor.

Beispiel XI

Weizenpflanzen wurden mit den in Tabelle II beanspruchten Verbindungen in den Anwendungskonzentrationen von 1000, 500, 250 und 125 mg Wirkstoff/Ltr. Spritzbrühe behandelt. Nach dem Antrocknen des Wirkstoffbelages wurden die Pflanzen mit Sporen des Weizenbraunrostes (Puccinia triticina) inokuliert und tropfnaß in eine Klimakammer mit 20°C und 100 % rel. Luftfeuchte gestellt. 24 Stunden später kamen die Pflanzen in ein Gewächshaus zurück und wurden hier 14 Tage nach Inokulation auf Befall mit Weizenbraunrost untersucht. Der Befallsgrad wurde ausgedrückt in % befallener Blattfläche, bezogen auf unbehandelte, infizierte Kontrollpflanzen (= 100 % Befall). Tabelle II zeigt die gute Wirkung der untersuchten Verbindungen.

Tabelle II

| Verbindung gem. Beispiel | % mit Braunrost befallene Blattfläche bei mg Wirkstoff/Ltr. Spritzbrühe | | | |
|---|---|---|---|---|
| | 1000 | 500 | 250 | 125 |
| 3 | 0 | 0 | 0 | 0 |
| 37 | 0 | 0 | 0-3 | 3 |
| 36 | 0 | 0 | 0-3 | 3 |
| 2 | 0 | 0 | 0 | 0 |
| 34 | 0 | 0 | 0-3 | 0 |
| unbehandelte infiz. Pflanzen | | 100 | | |

Beispiel XII

In einen gleichmäßig und stark mit Pythium ultimum verseuchten Boden wurde die beanspruchte Verbindung gleichmäßig eingemischt und verteilt. Der so behandelte Boden wurde in Plastiktöpfe abgefüllt und jeder Topf anschließend mit 10 Erbsensamen besät. 8 - 10 Tage nach Aussaat erfolgte die Auswertung der Versuche, indem die Zahl der aufgelaufenen, gesunden Pflanzen ermittelt und der Wirkungsgrad der beanspruchten Verbindung errechnet wurde. Als Kontrollen dienten Töpfe mit infizierter, unbehandelter Erde.

Tabelle III

| Verbindung gem. Beispiel | Wirkungsgrad in % mg Wirkstoff/kg Boden | | | |
|---|---|---|---|---|
| | 200 | 100 | 50 | 25 |
| 34 | 100 | 100 | 100 | 70 |
| unbehandelter infiz. Boden | | 0 | | |

Patentansprüche:

1. Verbindungen der Formel I

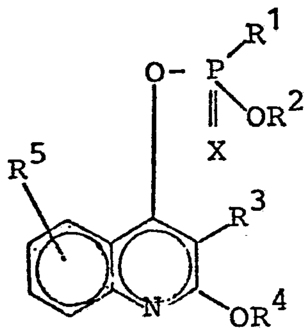

(I)

worin

$R^1$ = $(C_1-C_4)$-Alkyl, $(C_1-C_4)$-Alkoxy, $(C_1-C_4)$-Alkylmercapto, $(C_1-C_4)$-Alkylamino, $(C_1-C_4)$-Dialkylamino oder Phenyl

$R^2$ = $(C_1-C_4)$-Alkyl,

$R^3$ = Wasserstoff, Halogen, COOAlkyl, CONHAlkyl oder $CON(Alkyl)_2$ mit jeweils 1 - 4 C-Atomen je Alkylrest oder Cyano,

$R^4$ = $(C_1-C_4)$-Alkyl,

$R^5$ = Wasserstoff, Halogen, Nitro, $(C_1-C_4)$-Alkyl, $(C_1-C_4)$-Alkoxy oder Trihalogenmethyl und

X = Sauerstoff oder Schwefel

bedeuten.

2. O-Ethyl-O-(2-ethoxy-3-carbethoxy-4-chinolinyl)-S-n-propylthiophosphat.

3. Verfahren zur Herstellung der Verbindungen der Formel I, dadurch gekennzeichnet, daß man Verbindungen der Formel II

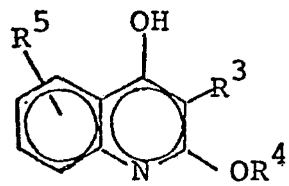

(II)

mit Verbindungen der Formel III

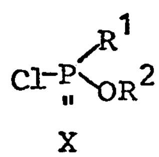

(III)

in Gegenwart eines Säureakzeptors umsetzt.

4. Schädlingsbekämpfungsmittel, gekennzeichnet durch einen Gehalt an Verbindungen der Formel I neben üblichen Formulierungshilfsmittel und Inertstoffen.

5. Verwendung der Verbindungen der Formel I zur Bekämpfung von Schädlingen.

Patentansprüche für Österreich:

1. Verfahren zur Herstellung von Verbindungen der Formel I,

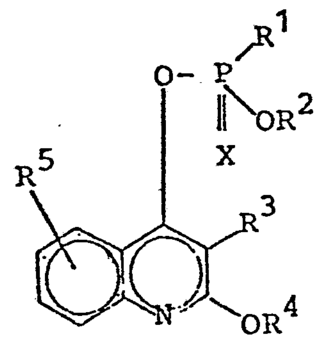

(I)

worin

$R^1$ = $(C_1-C_4)$-Alkyl, $(C_1-C_4)$-Alkoxy, $(C_1-C_4)$-Alkylmercapto, $(C_1-C_4)$-Alkylamino, $(C_1-C_4)$-Dialkylamino oder Phenyl

$R^2$ = $(C_1-C_4)$-Alkyl,

$R^3$ = Wasserstoff, Halogen, COOAlkyl, CONHAlkyl oder $CON(Alkyl)_2$ mit jeweils 1 - 4 C-Atomen je Alkylrest oder Cyano,

$R^4$ = $(C_1-C_4)$-Alkyl,

$R^5$ = Wasserstoff, Halogen, Nitro, $(C_1-C_4)$-Alkyl, $(C_1-C_4)$-Alkoxy oder Trihalogenmethyl und

X = Sauerstoff oder Schwefel

bedeuten, dadurch gekennzeichnet, daß man Verbindungen der Formel II

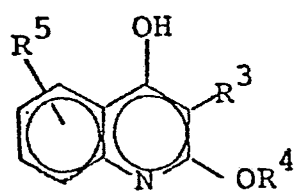

(II)

in der $R^3$, $R^4$ und $R^5$ die Bedeutungen wie in Formel I haben, mit Verbindungen der Formel III

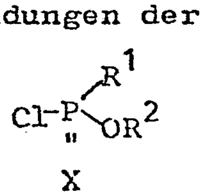

(III)

in der $R^1$, $R^2$ und X die Bedeutungen wie in Formel I haben, in Gegenwart eines Säureakzeptors umsetzt.

2. Schädlingsbekämpfungsmittel, gekennzeichnet durch einen Gehalt an Verbindungen der Formel I neben üblichen Formulierungshilfsmitteln und Inertstoffen.

3. Schädlingsbekämpfungsmittel, gekennzeichnet durch einen Gehalt an O-Ethyl-O-(2-ethoxy-3-carbethoxy-4-chinolinyl)-S-n-propyl-thiophosphat neben üblichen Formulierungshilfsmitteln und Inertstoffen.

4. Verwendung der Verbindungen der Formel I zur Bekämpfung von Schädlingen.